# EUROPÄISCHE PATENTSCHRIFT

(11) **EP 4 440 881 B1**
(45) Veröffentlichungstag und Bekanntmachung des Hinweises auf die Patenterteilung: **15.01.2025**
(21) Anmeldenummer: 22823532.1
(22) Anmeldetag: 01.12.2022
(51) Int. Cl.: B60Q 1/42

(54) **MECHANISCHES HEBELRÜCKSTELLSYSTEM FÜR DEN SCHALTHEBEL EINES FAHRTRICHTUNGSANZEIGESCHALTERS IN EINEM KRAFTFAHRZEUG**
MECHANICAL LEVER-RETURNING SYSTEM FOR THE SWITCHING LEVER OF A TURN SIGNAL SWITCH IN A MOTOR VEHICLE
SYSTÈME MÉCANIQUE DE RAPPEL DE LEVIER POUR LE LEVIER DE COMMUTATION D'UN COMMUTATEUR DE CLIGNOTANT DANS UN VÉHICULE AUTOMOBILE

(30) Priorität: 03.12.2021 DE 102021005977
(43) Veröffentlichungstag der Anmeldung: 09.10.2024
(73) Patentinhaber: KOSTAL Automobil Elektrik GmbH & Co. KG, 58513 Lüdenscheid (DE)
(72) Erfinder: GORONTZI, Tim, 58708 Menden (DE)
(74) Vertreter: Kerkmann, Detlef
(86) Internationale Anmeldenummer: PCT/EP2022/083992
(87) Internationale Veröffentlichungsnummer: WO 2023/099640

(56) Entgegenhaltungen:
- EP-A2- 0 945 304
- DE-A1- 4 226 506
- FR-A- 1 285 257
- GB-A- 885 853
- US-A- 3 408 467
- US-A- 3 914 566
- US-A- 5 021 617

## Beschreibung

Die Erfindung betrifft ein mechanisches Hebelrückstellsystem für den Schalthebel eines Fahrtrichtungsanzeigeschalters in einem Kraftfahrzeug, mit einer mit dem Schalthebel gekoppelten Gelenkplatte, welche zwei Rastklinken trägt, die jeweils einen mit der Lenksäule gekoppelten Auslösenocken in einer Richtung blockieren und in der entgegengesetzten Richtung passieren lassen, wobei der Schalthebel oder ein mit dem Schalthebel verbundenes Schaltstück über ein Drehgelenk mit einem drehbar gelagerten Mitnehmer gekoppelt ist, wobei die Gelenkplatte an dem Mitnehmer schwimmend gelagert ist, und wobei die beiden Rastklinken durch jeweils eine Rückstellfeder in einer Grundstellung gehalten werden, aus der sie nur in einer Drehrichtung unter Auslenkung der Rückstellfeder auslenkbar sind.

Ein ähnliches Hebelrückstellsystem ist bereits aus der deutschen Patentschrift DE 1 072 494 B bekannt. Die Rastklinken sind hier jeweils dreiteilig ausgeführt und bilden jeweils einen Kniehebel aus. Eine Überlastsicherung im Falle einer Rückstellung bei festgehaltenem Schalthebel ist hier nicht offenbart.

Aus der US Patentschrift US 5 021 617 A ist ein Hebelrückstellsystem gemäß dem Oberbegriff des Patentanspruchs 1 bekannt. Bei diesem System ist eine Gelenkplatte mittles einer axial wirkenden, federbelasteten Rastkurve schwimmend an einem Mitnehmer gelagert.

Moderne Serienlenksäulenmodule haben in der Regel einen rastenden Blinkerschalter und einen Schaltwinkel von circa 10° - 13°. Die mechanische Rückstellung dieser Standardschaltwege kann gut über die heutigen in Serie befindlichen Blinkerrückstellsysteme realisiert werden.

Heutige in Serie befindliche Rückstellsysteme arbeiten primär über eine schräge Ebene worüber ein federvorgespannter Schieber linear nach vorne freigelassen werden kann und wieder zurückgezogen wird. Da der Winkel dieser schiefen Ebene nicht beliebig klein gemacht werden kann, benötigt das System einen ausreichend großen Schaltwinkel.

Bei kleineren Schaltwinkeln kommen die heutigen Blinkerrückstellsysteme daher an ihre Funktionsgrenzen. Hinsichtlich der für die Zukunft geplanten Blinkerrückstellsysteme mit besonders kurzen Schaltwegen stellte sich die Frage nach einem alternativen Rückstellsystem.

Es stellte sich so die Aufgabe, ein mechanisches Hebelrückstellsystem zu entwickeln, das für kurze Schaltwege geeignet ist.

Diese Aufgabe wird erfindungsgemäß dadurch gelöst, dass der Auslösenocken mit einem Auslösering verbunden ist, der an einem mit der Lenksäule gekoppelten Lagerring gegen die Kraft eines Federelements verdrehbar gelagert ist.

Das erfindungsgemäße Hebelrückstellsystem benötigt keine schiefe Ebene, sondern arbeitet mit Hebelverhältnissen und eignet sich daher besonders gut für kurze Schaltwege.

Besonders vorteilhaft kann es Hebeldrehachsen nutzen, welche nicht, wie heute üblich, parallel zur Lenksäule ausgerichtet sind, und damit auch einen relativ großen Höhenversatz zwischen dem Hebeldrehpunkt und der Auslösenockenposition kompensieren.

Nachfolgend soll ein Ausführungsbeispiel der Erfindung anhand der Zeichnung dargestellt und erläutert werden. Es zeigen in jeweils einer Prinzipdarstellung die
- Figur 1: die Oberseite eines mechanischen Hebelrückstellsystems,
- Figur 2: die Unterseite eines mechanischen Hebelrückstellsystems,
- Figur 3: die Anordnung verschiedener Drehachsen,
- Figur 4: die Kopplung zwischen einem Schaltstück und einem Mitnehmer,
- Figur 5: die variable Positionierung des Auslösesystems relativ zum Schaltstück und zum Auslösenocken,
- Figur 6: einen Schalthebel in seiner Nullstellung,
- Figur 7: den Schalthebel in der Raststellung blinken links,
- Figur 8: eine alternative Ausführung des Schalthebels in der Raststellung blinken links,
- Figur 9: den Schalthebel in einer aktivierten Stellung,
- Figur 10: den Schalthebel in einer Auslösestellung,
- Figur 11: Schalthebel und Auslösenocken in einer ersten Freilaufposition,
- Figur 12: Schalthebel und Auslösenocken in einer zweiten Freilaufposition,
- Figur 13: den Auslösenocken in einer ersten Überschaltposition,
- Figur 14: den Auslösenocken in einer zweiten Überschaltposition,
- Figur 15: eine vergrößerte Darstellung der Kurvenbahn beim Überschalten,
- Figur 16: eine problematische Schaltstellung von Hebelrückstellsystem und Auslösering,
- Figur 17: die Unterseite des mechanischen Hebelrückstellsystems mit einem erfindungsgemäßen Auslösering,
- Figur 18: die Anordnung eines Federelements,
- Figur 19: die Unterseite des mechanischen Hebelrückstellsystems beim Erstkontakt,
- Figur 20: die Unterseite des mechanischen Hebelrückstellsystems mit ausgelenktem Auslösering,
- Figur 21: die Unterseite des mechanischen Hebelrückstellsystems bei der Rückstellung,
- Figur 22: die Unterseite des mechanischen Hebelrückstellsystems in der Nullstellung.

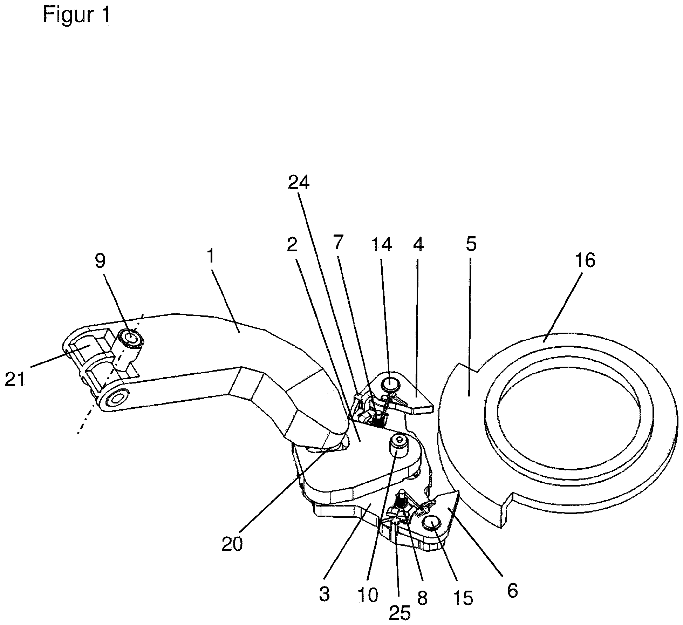

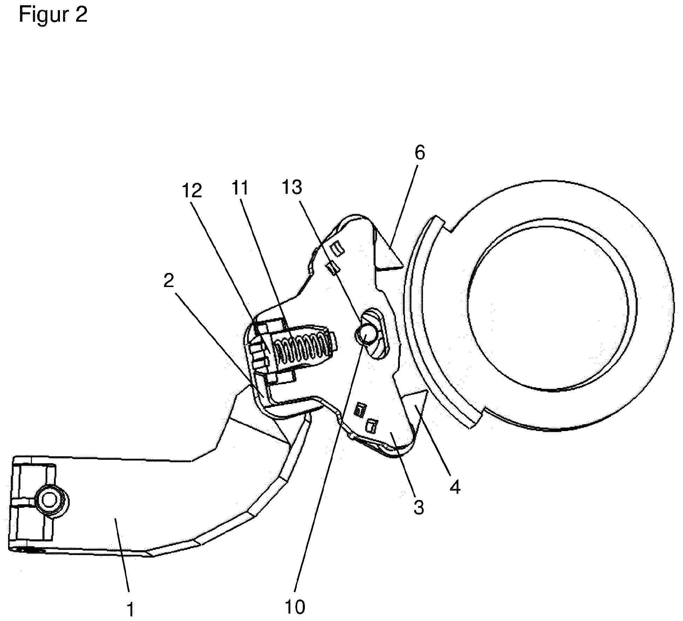

Die Figuren 1 und 2 stellen schematisch die Ober- und die Unterseite eines mechanischen Hebelrückstellsystems für den Schalthebel eines Fahrtrichtungsanzeigeschalters in einem Kraftfahrzeug dar.

Die Figuren 1 und 2 zeigen ein Schaltstück 1, welches an einem Befestigungsabschnitt 21 mit einem hier nicht dargestellten Schalthebel eines Lenkstockschalters zur Fahrtrichtungsanzeige in einem Kraftfahrzeug gekoppelt ist. Das Schaltstück 1 weist eine Lagerbuchse 9 auf, durch welche das Schaltstück 1 auf einer hier ebenfalls nicht dargestellten feststehenden Drehachse gelagert ist. Das Schaltstück 1 folgt so Schwenkbewegungen des Schalthebels um die Drehachse, wobei mögliche rastende Schaltstellungen auf bekannte Weise durch eine nicht dargestellte Rastkulisse vorgegeben werden, an der ein mit dem Schalthebel oder dem Schaltstück 1 verbundenes Rastelement geführt wird.

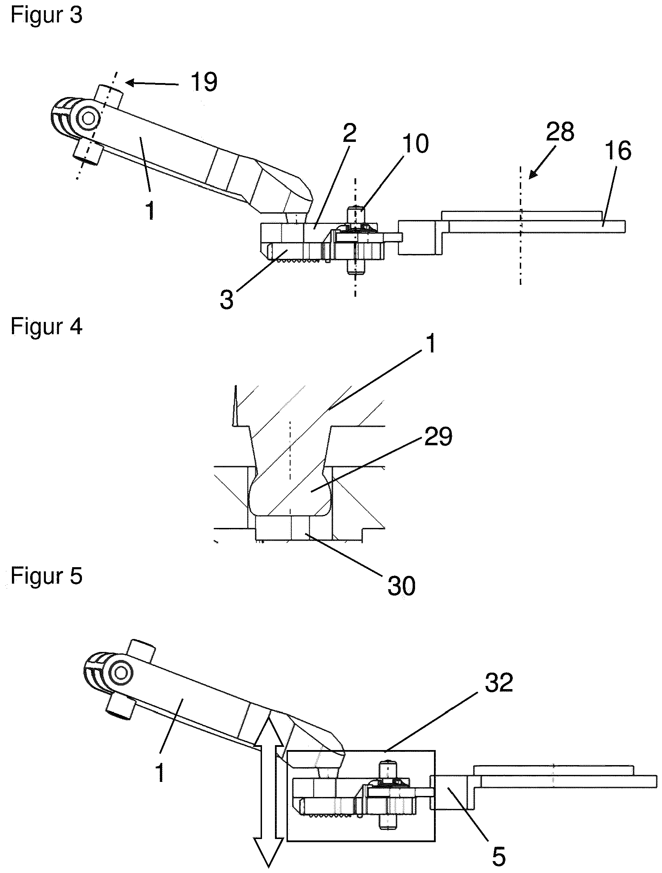

An seinem dem Befestigungsabschnitt 21 gegenüberliegenden Endabschnitt ist das Schaltstück 1 mittels eines Drehgelenks 20 mit einem hier als ebene Platte ausgeführten Mitnehmer 2 gekoppelt. In einer bevorzugten Ausführungsform ist das Drehgelenk 20 als ein Kugelgelenk ausgeführt, wie es in der der Figur 4 veranschaulicht ist.

Parallel zum Mitnehmer 2 ist eine Gelenkplatte 3 angeordnet, an der der Mitnehmer 2 gelagert ist. Hierzu drückt, wie die Figur 2 zeigt, eine Feder 11, die sich an einer Lagerstelle 12 am Mitnehmer 2 abstützt, die Gelenkplatte 3 gegen einen am Mitnehmer 2 befestigten zylindrischen Zapfen 10. Der Zapfen 10 bildet so eine Drehachse für die schwimmend gelagerte Gelenkplatte 3 aus. Die Feder 11 ist hier rein beispielhaft als Schraubenfeder ausgeführt.

Der Zapfen 10 greift dabei in eine in die Gelenkplatte 3 eingebrachte Kurvenbahn 13 ein. Hierdurch kann sich die Gelenkplatte 3 bei höheren Krafteinwirkungen gegen die Kraft der Schraubenfeder 11 auch seitlich gegenüber dem Mitnehmer 2 verschieben.

An zwei einander gegenüberliegenden Abschnitten der Gelenkplatte 3 ist jeweils eine Rastklinke 4, 6 an einer Drehachse 14, 15 verschwenkbar gelagert. Hierbei ist jede Rastklinke 4, 6 mittels einer als Schenkelfeder ausgebildeten Rückstellfeder 7, 8 gegenüber der Gelenkplatte 3 vorgespannt. Durch die Kraft der Rückstellfedern 7, 8 liegt jede Rastklinke 4, 6 an einem an der Gelenkplatte 3 angeformten Anschlag 24, 25 an. Jede Rastklinke 4, 6 ist dadurch um ihre zugehörige Drehachse 14, 15 in jeweils genau einer Schwenkrichtung gegen die Kraft der Rückstellfeder 7, 8 verschwenkbar. Eine Belastung der Rastklinken 4, 6 entgegen der Schwenkrichtung drückt die jeweilige Rastklinke 4, 6 gegen den ihr zugehörigen Anschlag 24, 25 an der Gelenkplatte 3, wodurch die Gelenkplatte 3 um den Zapfen 10 verschwenkt wird.

Die Rastklinken 4, 6 wirken mit einem oder mehreren Auslösenocken 5 zusammen, welche an einem Auslösering 16 angeformt sind, der mit der Lenkwelle oder dem Lenkrad eines Kraftfahrzeug verbunden ist.

Aus der Figur 3 geht hervor, dass Hebeldrehachse 19 nicht unbedingt parallel zu der durch den Zapfen 10 gebildeten Drehachse 10 zwischen Mitnehmer 2 und Gelenkplatte 3 beziehungsweise zur Drehachse 28 des Auslöserings 16 und der Lenksäule angeordnet sein muss, sondern stattdessen die Lage der Hebeldrehachse 19 weitgehend frei im Raum ausgerichtet sein kann.

Für eine freie Ausrichtung des Schaltstücks 1 kann gemäß der Figur 4 das Drehgelenk 20 durch eine am Schaltstück 1 angeformte Kugelgeometrie 29 ausgeführt sein, welche in eine Ausnehmung 30 am Mitnehmer 2 eingreift. Die Bewegung der Kugel oder Halbkugel 29 in der Ausnehmung 30 als Linearführung gleicht räumliche Bewegungen aufgrund der Nichtparallelität der Hebeldrehachse aus (Figur 4).

Das Auslösesystem 32 (in der Figur 5 durch eine Umrandung hervorgehoben) kann als separate Baugruppe relativ zum Schaltstück 1 und dem Auslösenocken 5 flexibel in der Höhe positioniert werden. Dies ermöglicht, Höhenunterschiede zwischen Hebeldrehpunkt und Auslösenocken 5 auszugleichen.

Anhand der nachfolgenden Figuren soll die Funktionsweise des mechanischen Hebelrückstellsystems näher erläutert werden.

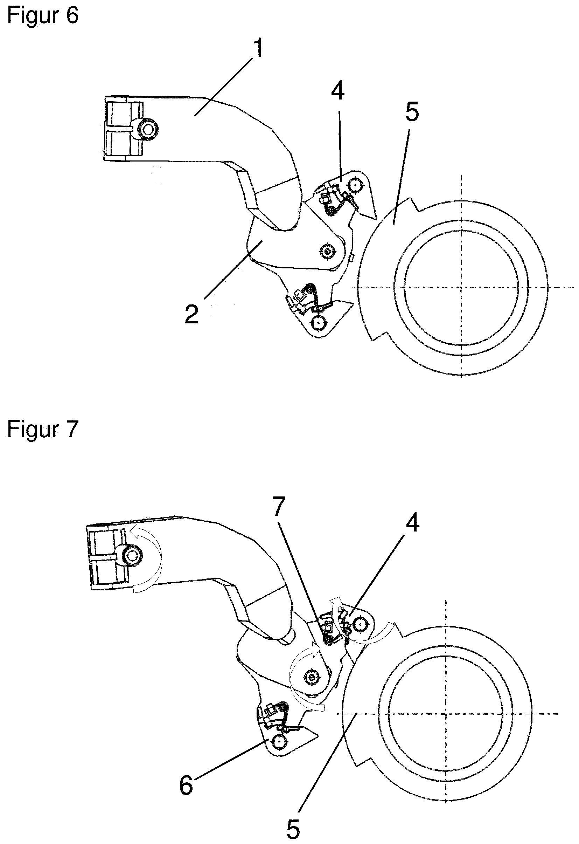

In der Figur 6 ist das Schaltstück 1 sowie der Auslösenocken 5 in der Nullstellung des Hebelrückstellsystems dargestellt, was der Geradeausstellung des Lenkrads entspricht. Der nicht dargestellte Schalthebel bzw. das damit verbundene Schaltstück 1 wird im Folgenden in die Rastposition Blinken links bewegt (Rastung nicht dargestellt). Hierdurch wird der Mitnehmer 2 über das Schaltstück 1 angesteuert und verschiebt die Rastklinke 4 in Richtung Auslösenocken 5.

Wenn die Rastklinke 4 auf den Auslösenocken 5 trifft (Figur 7), kann sie sich in der angezeigten Richtung wegdrehen. Die Rastklinke 4 ist nun durch die Rückstellfeder 7 vorgespannt.

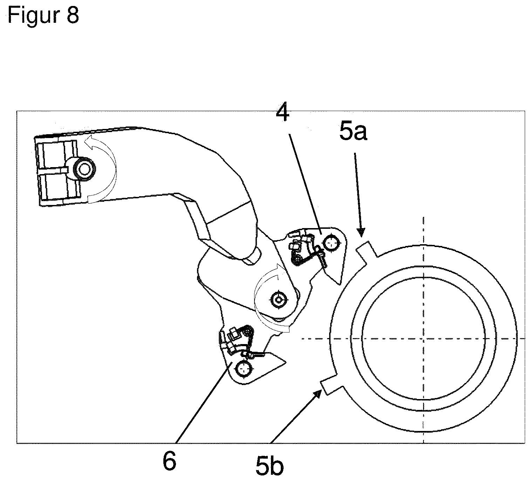

Wie die Figur 8 verdeutlicht kann der ansonsten einteilig dargestellte Auslösenocken 5 alternativ auch in zwei kleine Auslösenocken 5a, 5b unterteilt werden, sodass sich die Rastklinke 4 bzw. 6 in den meisten Auslösenocken- /Lenkradstellungen nicht mehr eindrehen muss.

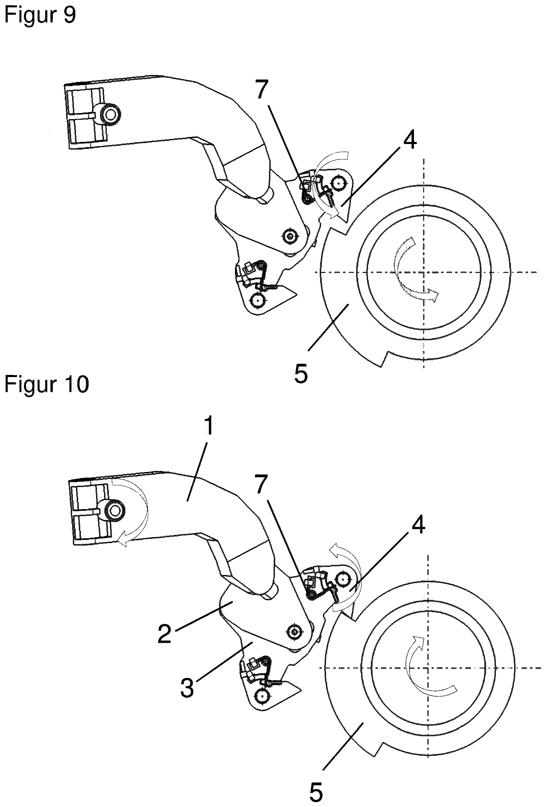

Wird nun bei einem Abbiegevorgang, wie in der Figur 9 gezeigt, der Auslösenocken 5 aus dem Bereich der Rastklinke 4 weggedreht, stellt sich die Rastklinke 5 aufgrund der Vorspannung durch die Rückstellfeder 7 wieder in ihre Ausgangslage zurück. Damit ist das Auslösesystem aktiviert.

Wird der Auslösenocken 5 danach zur Geradeausfahrt wieder in Nullstellung gedreht, so drückt der Auslösenocken 5 gegen die Rastklinke 4 (Figur 10). Die Rastklinke 4 überträgt die Kraft auf die Gelenkplatte 3 und über diese wiederum an den Mitnehmer 2 und darüber hinaus an das Schaltstück 1, welches letztendlich den Schalthebel aus seiner Rastung schiebt, bis sich dieser zurück in seine Nullstellung bewegt hat. Selbiges gilt natürlich entsprechend für die andere, hier nicht dargestellte Funktionsrichtung.

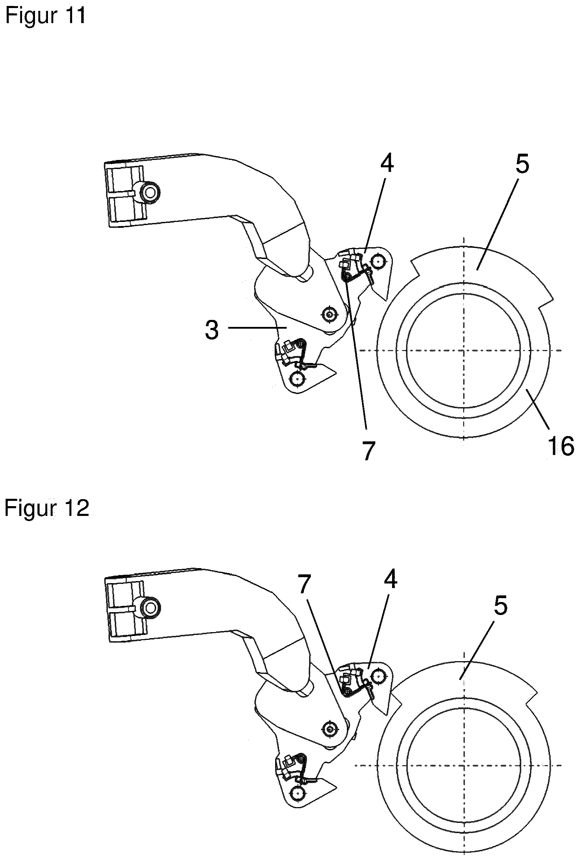

Da der Auslösenocken 5 von beiden Seiten mit der Rastklinke 4 in Kontakt treten kann, jedoch nur eine Richtung zur Rückstellung des Schalthebels dient, muss die Rastklinke 4 einseitig ausweichen können. Dazu ist die Rastklinke 4 drehbar an der Gelenkplatte 3 gelagert sowie durch die Rückstellfeder 7 vorgespannt (Figur 11). Trifft der Auslösenocken 5 von außen auf die Rastklinke 4 (Figur 12), so dreht sich die Rastklinke 4 gegen die Kraft der Rückstellfeder 7 weg, sodass ein Freilauf entsteht. Ist der Auslösenocken 5 an der Rastklinke 4 vorbeigefahren, so stellt sich die Rastklinke 4 über die Rückstellfeder 7 wieder in ihre Ausgangsstellung zurück.

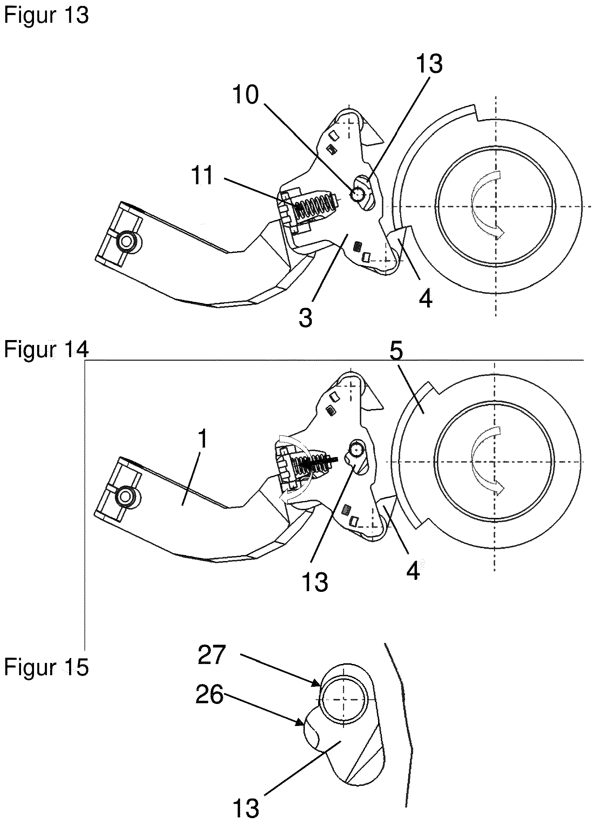

Im Falle, dass der Schalthebel dran gehindert wird, wieder in die Nullstellung zurückzukehren und trotzdem das Rückstellsystem betätigt wird, verhindert ein Schutzmechanismus, der auch als Überschaltsystem bezeichnet wird, einen Schaden an den Komponenten. Dieser Schutzmechanismus (Figur 13) wird durch die Schraubenfeder 11, die Kurvenbahn 13 und den zylindrischen Zapfen 10 gebildet. Vorteilhafterweise dient hierbei der Zapfen 10 zugleich als Lagerachse des Mitnehmers 2 und ermöglicht so eine platzsparende Bauweise.

Die Vorspannung durch die Schraubenfeder 11 ist groß genug gewählt, dass unter Einwirkung dynamischer Effekte, wie beispielsweise eine hohe Geschwindigkeit des Auslösenockens 5 und einer hohen Trägheit des Schalthebels, der Schutzmechanismus nicht versehentlich aktiviert wird, obwohl der Schalthebel freigängig ist.

Wird der Schalthebel und damit das Schaltstück 1 blockiert und über den Auslösenocken 5 eine ausreichend große Kraft in die Rastklinke 4 eingeleitet (Figur 13), fängt der Schutzmechanismus an zu arbeiten. Die Gelenkplatte 3, welche die Kurvenbahn 13 beinhaltet, verschiebt sich mit der Kurvenbahn 13 entlang des zylinderförmigen Zapfens 10 und dreht sich zugleich um die hintere Lagerstelle (Figur 14).

Dabei bewegt sich die Kurvenbahn 13 zunächst mit der steilen Flanke 26 am Zapfen 10 entlang und danach mit der flachen Flanke 27, welche dafür sorgt, dass die über den Auslösenocken 5 eingeleitete Kraft begrenzt wird. Die Figur 15 verdeutlicht die Kurvenbahn 13 und den darin geführten Zapfen 10 in einer vergrößerten Abbildung.

Die stattfindende Bewegung der Gelenkplatte 3 ist eine translatorisch rotatorisch kombinierte Bewegung, welche die Rastklinke 4 aus dem Eingriff des Auslösenockens 5 bewegt. Ist die Rastklinke 4 aus dem Eingriff, stellt sich die Gelenkplatte 3 über die Schraubenfeder 11 und die Kurvenbahn 13 wieder selbsttätig in die Ursprungsposition zurück.

Beim Einschalten des Schalthebels gibt es einen problematischen Graubereich. Normalerweise, wie in den Figuren 6 und 7 dargestellt, fährt die Rastklinke 4 bzw. 6 beim Einschalten des Blinkerhebels vor den Auslösenocken 5 und dreht sich ein. Wenn das Lenkrad über einen ausreichend großen Drehwinkel gedreht wird und der Auslösenocken 5 dadurch nicht mehr vor einer der Rastklinken 4, 6 steht, kann diese in den freien Raum eintauchen.

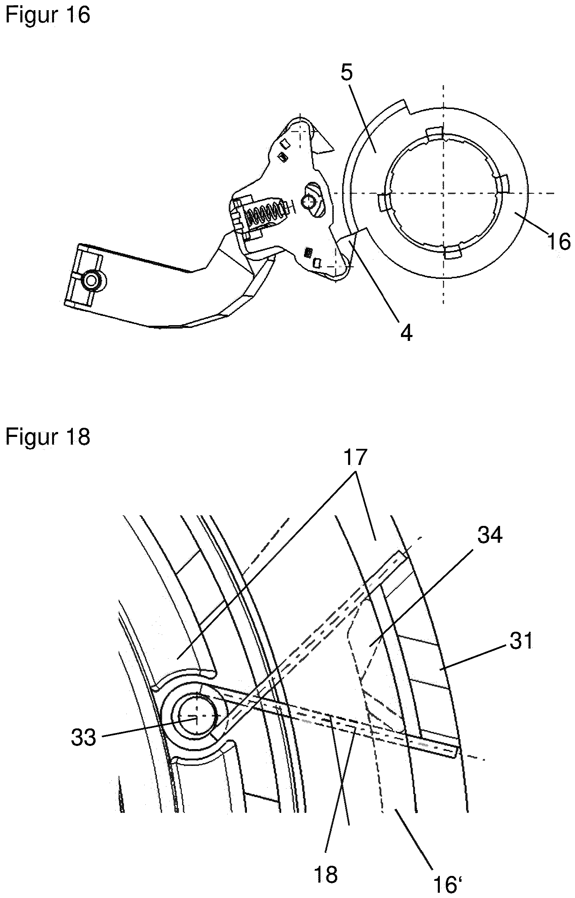

In einer bestimmten Konstellation von Lenkwinkel zu Blinkrichtung und gleichzeitigem Einschalten der Blinkerfunktion, kann die kinematische Bewegung der jeweiligen Rastklinke 4, 6 dazu führen, dass diese seitlich auf den Auslösenocken 5 trifft. Bei der in der Figur 16 dargestellten Lenkwinkelstellung wäre dies beispielsweise die Rastklinke 4. Da die Rastklinke 4 in der Bewegungsrichtung jedoch nicht ausweichen kann, weil es dieselbe Wirkrichtung ist wie beim Rückstellen, falls der Auslösenocken 5 ebenfalls starr ist, kann der Schalthebel nicht wie gewohnt betätigt werden. Würde man trotz erhöhter Kräfte versuchen, den Schalthebel einzuschalten, würde das Überschaltsystem aktiviert werden. Der Schalthebel könnte bis in die Blinkposition geschaltet werden, würde aber in der Regel, aufgrund des Überschaltsystems, nicht in der Rastposition verbleiben, sondern wieder in die Nulllage zurückgedrückt werden. Das Blinksignal würde ausgegeben werden. Würde man nicht versuchen den Blinkerhebel weiterzudrücken, könnte es je nach Lenkwinkelstellung dazu führen, dass kein Blinksignal ausgegeben wird.

Dieses Problem tritt nur in einem bestimmten, jedoch sehr kleinen Lenkwinkelbereich (beispielsweise zwischen 23° - 28°) auf, und nur, wenn der Blinker in dieselbe Richtung eingeschaltet wird, in die gelenkt wird.

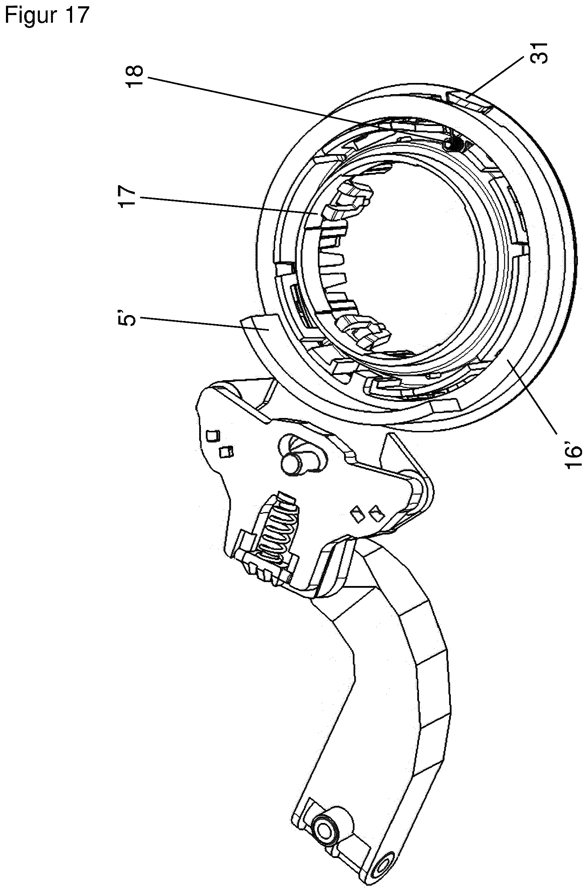

Die Lösung dieses Problem ist in der Figur 17 dargestellt. Der Auslösering 16' mit dem Auslösenocken 5' ist hier von dem den Auslösering 16' tragenden Lagerring 17 entkoppelt und somit ein separates Einzelteil. Der Auslösering 16' ist axial und radial am Lagerring 17 gelagert. Der Lagerring 17 kann beispielsweise ein Bestandteil einer Wickelfederkassette sein.

Die Lagerung ist so ausgeführt, dass sich der Auslösenocken 5' gegen den Lagerring 17 sowohl im als auch gegen den Uhrzeigersinn verdrehen kann. Dadurch dreht sich der Auslösenocken 5' weg, wenn eine der Rastklinken 4, 6 gegen die seitliche Fläche des Auslösenockens 5' drückt. Der mögliche Rotationswinkel des Auslösenockens 5' ist so groß, dass es keine Beeinträchtigung beim Betätigen des Schalthebels gibt.

Damit das Prinzip funktioniert, muss der Auslösenocken 5' bei Beginn einer Auslenkung in Nulllage stehen. Das bedeutet, dass der Auslösering 16' am Lagerring 17 in Nulllage zentriert steht und auch wieder aus einer ausgelenkten Position in die Nulllage zurückgestellt wird.

Dieses wird über ein vorgespanntes Federelement 18 zwischen Lagerring 17 und Auslösering 16' erreicht (Figur 18). Das Federelement 18 ist hier als eine Schenkelfeder ausgeführt, die mit ihrem gewundenen Abschnitt an einem am Lagerring 17 angeformten Haltestift 33 gehalten wird und deren Schenkel beidseitig an einem ebenfalls am Lagerring 17 angeformten Federlager 31 anliegen. Das Federelement 18 kann durch eine mit dem Auslösering 16' verbundenen Mitnahmekontur 34 in beide Richtungen ausgelenkt werden.

Mittels der Federkraft des Federelements 18 wird der Auslösenocken 5' in zentraler Position gehalten und auch wieder aus einer ausgelenkter Lage in die Nulllage zurückgestellt. Somit ist sichergestellt, dass der Auslösenocken 5' sowohl im und als auch gegen den Uhrzeigersinn ausweichen kann.

Zusätzlich drückt die Federkraft des Federelements 18 den Auslösering 16' radial in eine Vorzugsposition, sodass der Auslösering 16' radial spielfrei gelagert ist.

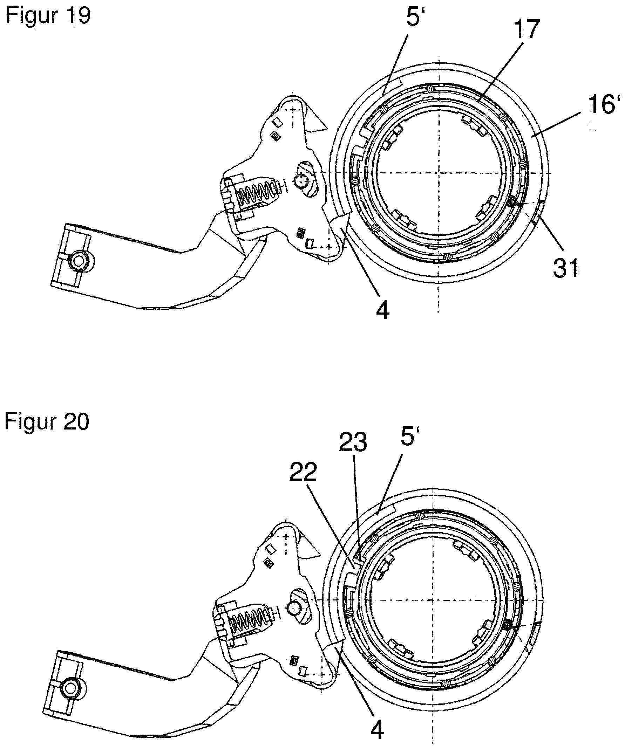

Die Figuren 19 bis 22 verdeutlichen die Funktionsweise dieser Anordnung. Figur 19 zeigt den Zustand des Erstkontaktes zwischen der Rastklinke 4 und dem Auslösenocken 5'. Der Auslösenocken 5' wurde noch nicht bewegt.

Figur 20 zeigt einen ausgelenkten Auslösenocken 5'. Das Federelement 18 ist durch den Kontakt zum Auslösering 16' weiter gespannt. Das Federelement 18 ist stark genug, um den Auslösenocken 5' gegen die Reibung wieder in die Nulllage zu drücken. Andererseits ist das Federelement 18 auch möglichst klein ausgeführt, damit der Auslösenocken 5' den Schalthebel im eingeschalteten Zustand nicht aus der Schalterrastung schiebt.

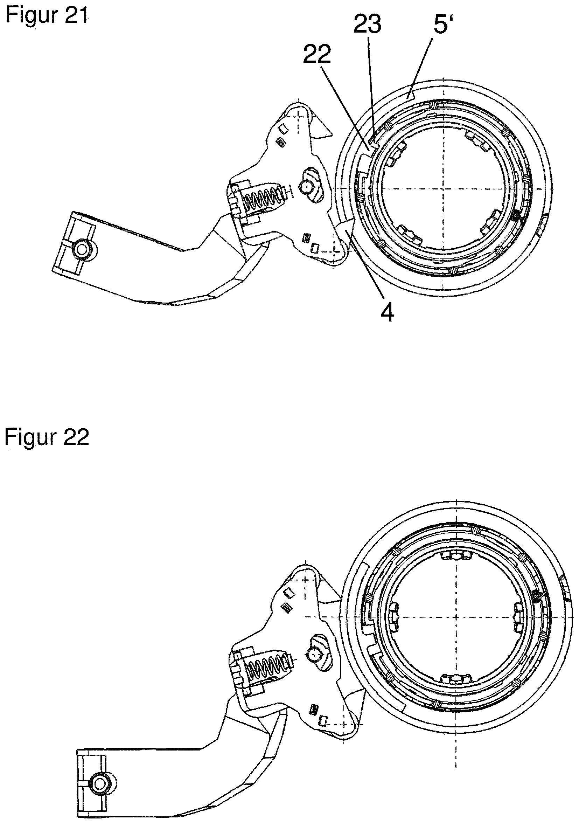

Um den Schalthebel über das mechanische Rückstellsystem auszuschalten, wird der Auslösenocken 5' rotatorisch verfahren bis eine Mitnahmegeometrie 22 des Auslöserings 16' in Kontakt mit einer Mitnahmegeometrie 23 des Lagerrings 17 kommt. Danach wird vom Lenkrad über den Lagerring 17 und den Auslösering 16' eine Kraft auf die Rastklinke 4 übertragen, die ausreichend groß ist, um den Schalthebel aus der Rastlage zu drücken (Figur 21).

Die Figur 22 zeigt den Zustand nach dem Rückstellprozess durch das mechanische System.

### Bezugszeichen

- 1: Schaltstück / Kardangelenk
- 2: Mitnehmer
- 3: Gelenkplatte
- 4: (erste) Rastklinke
- 5, 5', 5a, 5b: Auslösenocken
- 6: (zweite) Rastklinke
- 7: (erste) Rückstellfeder
- 8: (zweite) Rückstellfeder
- 9: Lagerbuchse (Blinkerdrehachse)
- 10: Zapfen (Drehachse Mitnehmer)
- 11: Feder (Schraubenfeder)
- 12: Lagerstelle
- 13: Kurvenbahn
- 14: Drehachse (erste Rastklinke)
- 15: Drehachse (zweite Rastklinke)
- 16, 16': Auslösering
- 17: Lagerring
- 18: Federelement
- 19: Hebeldrehachse
- 20: Drehgelenk
- 21: Befestigungsabschnitt
- 22: Mitnahmegeometrie (des Auslöserings)
- 23: Mitnahmegeometrie (des Lagerrings)
- 24: Anschlag
- 25: Anschlag
- 26: steile Flanke
- 27: flache Flanke
- 28: Drehachse (des Auslöserings)
- 29: Kugelgeometrie (Kugel oder Halbkugel)
- 30: Ausnehmung
- 31: Federlager
- 32: Auslösesystem
- 33: Haltestift
- 34: Mitnahmekontur

## Patentansprüche

1. Mechanisches Hebelrückstellsystem für den Schalthebel eines Fahrtrichtungsanzeigeschalters in einem Kraftfahrzeug,
mit einem Schalthebel,
mit einem über eine Drehachse (10) drehbar gelagerten Mitnehmer (2),
mit einer Lenksäule,
mit einer mit dem Schalthebel gekoppelten Gelenkplatte (3), welche zwei Rastklinken (4, 6) trägt, die jeweils einen mit der Lenksäule gekoppelten Auslösenocken (5, 5', 5a, 5b) in einer Richtung blockieren und in der entgegengesetzten Richtung passieren lassen,
wobei der Schalthebel oder ein mit dem Schalthebel verbundenes Schaltstück (1) über ein Drehgelenk (20) mit dem drehbar gelagerten Mitnehmer (2) gekoppelt ist,
wobei die Gelenkplatte (3) an dem Mitnehmer (2) schwimmend gelagert ist, und wobei die beiden Rastklinken (4, 6) durch jeweils eine Rückstellfeder (7, 8) in einer Grundstellung gehalten werden, aus der sie nur in einer Drehrichtung unter Auslenkung der Rückstellfeder (7, 8) auslenkbar sind,
**dadurch gekennzeichnet,**
**dass** der Auslösenocken (5, 5', 5a, 5b) mit einem Auslösering (16, 16') verbunden ist, der an einem mit der Lenksäule gekoppelten Lagerring (17) gegen die Kraft eines Federelements (18) verdrehbar gelagert ist.

2. Mechanisches Hebelrückstellsystem nach Anspruch 1, **dadurch gekennzeichnet, dass** das Drehgelenk (20) eine Kugelgeometrie (29) aufweist.

3. Mechanisches Hebelrückstellsystem nach Anspruch 1, **dadurch gekennzeichnet, dass** das Drehgelenk (20) ein Kardangelenk ist

4. Mechanisches Hebelrückstellsystem nach Anspruch 1, **dadurch gekennzeichnet, dass** die Rastklinken (4, 6) jeweils einstückig ausgebildet sind.

5. Mechanisches Hebelrückstellsystem nach Anspruch 1, **dadurch gekennzeichnet, dass** die Gelenkplatte (3) eine Kurvenbahn (13) aufweist, an der die Drehachse (10) des Mitnehmers (2) federbelastet anliegt.

## Claims

1. Mechanical lever-returning system for the switching lever of a turn signal switch in a motor vehicle, with a switching lever, with a driver (2) rotatably mounted on the axis of rotation (10), with a steering column,
with a hinged plate (3) connected to the switching lever, which carries two latching pawls (4, 6) that each block a release cam (5, 5', 5a, 5b) connected to the steering column in one direction and allow it to pass in the opposite direction,
wherein the switching lever or a switching piece (1) connected to the switching lever is coupled to the rotatably mounted driver (2) via a pivot joint (20),
whereby the hinged plate (3) is mounted in a floating manner on the driver (2),
and wherein the two latching pawls (4, 6) are each held by a return spring (7, 8) in a basic position, from which they can only be deflected in one direction of rotation, deflecting the return spring (7, 8),
**characterized in**
**that** the release cam (5, 5', 5a, 5b) is connected to a release ring (16, 16') which is mounted on a bearing ring (17) coupled to the steering column such that it can be rotated against the force of a spring element (18).

2. Mechanical lever-returning system according to claim 1, **characterized in that** the pivot joint (20) has a spherical geometry (29).

3. Mechanical lever-returning system according to claim 1, **characterized in that** the pivot joint (20) is a cardan joint.

4. Mechanical lever-returning system according to claim 1, **characterized in that** the latching pawls (4, 6) are each designed in one piece.

5. Mechanical lever-returning system according to claim 1, **characterized in that** the hinged plate (3) has a cam track (13), against which the axis of rotation (10) of the driver (2) rests in a spring-loaded manner.

## Revendications

1. Système mécanique de rappel de levier pour le levier de commutation d'un commutateur de clignotant dans un véhicule automobile, comprenant un levier de commande, avec un entraîneur (2) monté à rotation sur l'axe de rotation (10), avec une colonne de direction,
avec une plaque articulée (3) couplée au levier de commutation, qui porte deux cliquets d'arrêt (4, 6), qui bloquent chacun une came de déclenchement (5, 5', 5a, 5b) couplée à la colonne de direction dans une direction et la laissent passer dans la direction opposée,
le levier de commutation ou une pièce de commande (1) reliée au levier de commutation est couplé à l'entraîneur (2) monté rotatif par l'intermédiaire d'un joint tournant (20)
la plaque articulée (3) étant montée de manière flottante sur l'entraîneur (2),
et dans lequel les deux cliquets d'arrêt (4, 6) sont maintenus chacun par un ressort de rappel (7, 8) dans une position de base à partir de laquelle ils ne peuvent être déviés que dans un sens de rotation en déviant le ressort de rappel (7, 8),
**caractérisé en ce**
**que** la came de déclenchement (5, 5', 5a, 5b) est reliée à une bague de déclenchement (16, 16') qui est montée sur une bague de palier (17) couplée à la colonne de direction de manière à pouvoir tourner contre la force d'un élément de ressort (18).

2. Système mécanique de rappel de levier selon la revendication 1, **caractérisé en ce que** le joint tournant (20) présente une géométrie sphérique (29).

3. Système mécanique de rappel de levier selon la revendication 1, **caractérisé en ce que** le joint tournant (20) est un joint de cardan.

4. Système mécanique de rappel de levier selon la revendication 1, **caractérisé en ce que** les cliquets d'arrêt (4, 6) sont respectivement formés d'une seule pièce.

5. Système mécanique de rappel de levier selon la revendication 1, **caractérisé en ce que** la plaque articulée (3) présente une piste de came (13) sur laquelle l'axe de rotation (10) de l'entraîneur (2) s'appuie sous la contrainte d'un ressort.
